# EUROPÄISCHE PATENTSCHRIFT

(11) **EP 3 642 296 B1**
(45) Veröffentlichungstag und Bekanntmachung des Hinweises auf die Patenterteilung: **19.01.2022**
(21) Anmeldenummer: 18753066.2
(22) Anmeldetag: 23.07.2018
(51) Int. Cl.: C09K 5/14, F28D 20/00

(54) **ANORDNUNG ZUR WÄRMESPEICHERUNG**
ASSEMBLY FOR STORING HEAT
DISPOSITIF DE STOCKAGE THERMIQUE

(30) Priorität: 24.07.2017 DE 102017212684
(43) Veröffentlichungstag der Anmeldung: 29.04.2020
(73) Patentinhaber: Siemens Gamesa Renewable Energy GmbH & Co. KG, 20097 Hamburg (DE)
(72) Erfinder: BETKO, Hans-Joachim, 82340 Feldafing (DE); WAGNER, Jennifer Verena, 20257 Hamburg (DE)
(74) Vertreter: Aspacher, Karl-Georg
(86) Internationale Anmeldenummer: PCT/EP2018/069906
(87) Internationale Veröffentlichungsnummer: WO 2019/020562

(56) Entgegenhaltungen:
- WO-A1-2013/167158
- DE-A1- 2 940 830
- US-A- 4 362 149

## Beschreibung

Die Erfindung betrifft eine Anordnung zur Speicherung von thermischer Energie.

Bei einem hohen Anteil an erneuerbarer Energie (Windenergie, Sonnenenergie, Gezeitenenergie, etc.) in einem Energieversorgungsnetz wird es zunehmend wichtiger, die erneuerbare Energie zwischenzuspeichern, um die Verfügbarkeit der erneuerbaren Energie mit den Erfordernissen der Netzstabilität und dem Verbraucherverhalten sinnvoll zu kombinieren.

Es ist bekannt, gewonnene elektrische Energie in thermische Energie (Hitze) umzuwandeln und in einem Wärmespeicher zeitlich begrenzt zwischenzuspeichern.

Es sind Wärmespeicher bekannt, bei denen feste Materialien als Speichermaterial verwendet werden - beispielsweise Steine oder Keramik bzw. Geröll. Ein erhitztes Fluid - zum Beispiel elektrisch aufgeheizte Luft - wird als Hitze-Übertragungs-medium verwendet und in den Wärmespeicher eingeleitet. Das feste Speichermaterial des Wärmespeichers wird aufgeheizt und zur zeitlichen Energiespeicherung verwendet.

Entsprechend wird bei einer Energieentnahme aus dem Wärmespeicher ein (kühles) Fluid wie Luft in den Wärmespeicher geblasen, darin aufgeheizt und danach einem Wandlersystem zugeführt. Das Wandlersystem wandelt dann die aus dem Wärmespeicher über das Fluid (Luft) entnommene thermische Energie in elektrische Energie um.

Beispielsweise wird mit Hilfe der erhitzen Luft die entnommene thermische Energie über einen Wasserdampf-Kreislauf und unter Verwendung einer Dampfturbine in elektrische Energie umgewandelt.

Ein entsprechendes, Wettbewerb-fähiges Energiespeichersystem hoher Effizienz muss hohe Dampfparameter (Temperatur T, Leistung P) gewährleisten. Dies kann nur erreicht werden, wenn thermische Energie unter Verwendung hoher Temperaturen gespeichert wird. Das zur Speicherung verwendete Material ist somit hohen und ggf. schnell erfolgenden Temperaturunterschieden ausgesetzt und muss damit einhergehend entsprechenden Belastungen (z.B. thermischen bzw. mechanischen Belastungen) widerstehen.

Insbesondere muss sichergestellt werden, dass das verwendete Speichermaterial so temperaturstabil ist, dass Materialrisse, Brüche oder gar strukturelle Auflösungen des Speichermaterials vermieden werden. Größere Änderungen in der Struktur oder im Volumen des verwendeten Speichermaterials würden im Wärmespeicher ungewollte Effekte verursachen.

Beispielsweise könnte es zur Bildung von ungeplanten Kanälen kommen, die den Durchfluss des Hitze-Übertragungsmediums im Wärmespeicher nachteilig beeinflussen könnten. Ebenso könnte es zur Bildung von sogenannten "Totbereichen" im Wärmespeicher kommen, die vom Hitze-Übertragungs-medium nicht mehr erreicht werden und damit für die Energiespeicherung verloren wären.

Letztlich würden derartige Störungen im Wärmespeicher zu einer ungleichmäßigen und damit nachteiligen Temperaturverteilung führen.

Zusätzlich muss das verwendete Speichermaterial chemischen Reaktionen (z.B. Oxidationen) Widerstand leisten, die bei hohen Temperaturen und bei Verwendung von ggf. feuchter Luft als Übertragungsmedium negative Einflüsse auf den Wärmespeicher haben könnten.

Die Wahl eines geeigneten Wärmespeichermaterials bietet die Voraussetzung, dass trotz der geschilderten thermischen, mechanischen bzw. chemischen Vorgänge die Einsatz- und Lebensdauer sowie die Effektivität des Wärmespeichers zu optimieren.

Beispielsweise ist aus der Veröffentlichungsschrift DE 2940830 A1 bekannt, dass Natursteine in gebrochener Form, z.B. schweren Eruptivgesteine, in einer Gebäudekonstruktion zur natürlichen und künstlichen Regulierung des thermischen Raumklimas eingesetzt werden können.

Die Schrift WO 2013/167158 A1 beschreibt einen Langzeitwärmespeicher, bei dem eine Gesteinsschüttung als Wärmespeichermasse verwendet wird. Vorzugsweise ist die Verwendung von Gestein vulkanischer Herkunft offenbart.

Das Patent US 4,362,149 A betrifft ebenfalls einen thermischen Speicher mit einer Gesteinsschüttung, wobei das Gestein beispielsweise vulkanischem Ursprung sein kann.

Es ist daher die Aufgabe der vorliegenden Erfindung, einen bezüglich Einsatz und Lebensdauer optimierten Wärmespeicher anzugeben.

Diese Aufgabe der Erfindung wird durch die Merkmale des Anspruchs 1 erfüllt.

Vorteilhafte Weiterbildungen der Erfindung sind in den abhängigen Ansprüchen angegeben.

Es wird eine Anordnung zur Speicherung von thermischer Energie beansprucht. Die Anordnung umfasst einen räumlich ausgestalteten Wärmespeicher, ein festes natürliches Material, das zur Wärmespeicherung ausgebildet ist, und ein Fluid, das zur Übertragung von thermischer Energie an das Wärmespeichermaterial und zur Entnahme von thermischer Energie aus dem Wärmespeichermaterial ausgebildet ist.

Das Wärmespeichermaterial ist im Inneren des Wärmespeichers angeordnet.

Der Wärmespeicher weist zumindest einen Eingang und zumindest einen Ausgang auf, über die das Fluid zur Energiespeicherung und zur Energieentnahme geleitet wird.

Im Vergleich zur Temperatur des Wärmespeichermaterials heißeres, erhitztes Fluid wird zur Energiespeicherung über den Eingang in den Wärmespeicher eingeleitet. Dort wird thermische Energie vom Fluid an das Wärmespeichermaterial übertragen. Das kühlere Fluid wird über den Ausgang aus dem Wärmespeicher geleitet.

Entsprechend wird - im Vergleich zur Temperatur des Wärmespeichermaterials - kühleres Fluid zur Energieentnahme über den Eingang in den Wärmespeicher eingeleitet. Dort wird thermische Energie vom Wärmespeichermaterial an das Fluid übertragen und das jetzt heißere Fluid wird über den Ausgang aus dem Wärmespeicher geleitet.

Erfindungsgemäß wird als Wärmespeichermaterial magmatisches Gestein verwendet, welches dadurch gekennzeichnet ist, dass es keine Anteile an primären wasserhaltigen Mineralphasen aufweist.

Als Fluid wird bevorzugt Luft verwendet, die als Übertragungsmedium zur Energiespeicherung bzw. zur Energieentnahme dient.

Bei der Energiespeicherung wird das im Vergleich zum Wärmespeicher Energie-reichere Fluid über zumindest eine Eingangsöffnung in den Wärmespeicher eingeleitet und darin derart geführt, dass das Wärmespeicher-Material durch das Fluid erhitzt wird. Mit Hilfe des Wärmespeicher-Materials wird also die über das Fluid zugeführte thermische Energie gespeichert. Das nach der Speicherung entsprechend Energie-ärmere bzw. kühlere Fluid wird über die zumindest eine Ausgangsöffnung aus dem Wärmespeicher geführt.

Bei der Energieentnahme wird im Vergleich zum Speichermaterial kühleres bzw. energieärmeres Fluid über zumindest eine Eingangsöffnung in den Wärmespeicher eingeleitet und darin derart geführt, dass das Wärmespeicher-Material das Fluid erhitzt. Mit Hilfe des Wärmespeicher-Materials wird also dem Fluid thermische Energie zugeführt. Das nach der Energieentnahme entsprechend Energie-reichere Fluid wird über zumindest eine Ausgangsöffnung aus dem Wärmespeicher geführt.

Das Material des Wärmespeichers besteht gemäß der Erfindung aus Magmatit - magmatischem Gestein welches keine Anteile an primären wasserhaltigen Mineralphasen aufweist - wie beispielsweise aus Vulkanit oder Plutonit. Magmatisches Gestein oder Erstarrungsgestein ist Gestein, das durch abkühlungsbedingtes Erstarren einer Gesteinsschmelze (Magma) entstanden ist. Die Magmatite sind neben den Sedimentgesteinen (Sedimentite) und den Metamorphiten eine von drei Gesteinshauptgruppen.

In einer bevorzugten Ausgestaltung der Erfindung weisen die Magmatite keinen kristallinen Quarz-Anteil an SiO₂ auf (Modal 0 %), da dieser bereits bei Atmosphärendruck und bei ca. 575°C seine Kristallstruktur ändern würde. Bei entsprechend höheren Temperaturen im Wärmespeicher werden dadurch Spannungen im gesteinsbildenden Quarzkorn und damit das Auftreten von feinsten Rissen bzw. Abplatzungen vermieden.

Die verwendete Angabe "Modal %" beschreibt den modalen Mineralbestand eines Gesteins und bezeichnet das relative Verhältnis der im Gestein auftretenden Minerale. Dieses Verhältnis wird bevorzugt durch mikroskopisches Auszählen ermittelt.

In einer bevorzugten Ausgestaltung weisen die Magmatite keine glasig-amorphen Anteile und Allophane auf (Modal 0 %).

Dadurch werden Schwächungen des gesamten Mineralverbunds sowie Zerbröselungen des zur Wärmespeicherung verwendeten Gestein-Materials vermieden, denn die genannten Stoffe würden bei Temperaturschwankungen von mehreren 100°C zerspringen.

Erfindungsgemäß weisen die Magmatite keine Anteile an primären wasserhaltigen Mineralphasen (z.B. Zeolithe, Hornblenden, Tonminerale, Glimmer, Kaolinminerale, Illit-Smektit, Chlorit etc.) auf (Modal 0 %).

Dadurch wird die Abgabe von Kristallwasser beim wiederholten Aufheizen dieser wasserhaltigen Mineralphasen vermieden, da dieses zu lokalen Spannungen und Schrumpfrissen im Wärmespeichermaterial führen könnte.

In einer bevorzugten Ausgestaltung weisen die Magmatite keine Karbonate (z.B. Calcit, Aragonit, Dolomit) auf (Modal 0 %). Dadurch wird eine Reaktion der Karbonate mit nachfolgender Bildung von gasförmigem Kohlendioxid sowie eine Schwächung des Mineralverbunds des Wärmespeichermaterials vermieden.

In einer bevorzugten Ausgestaltung weisen die Magmatite keine Sulfate (z.B. Gips, Anhydrit) als Salze auf (Modal 0 %). Auch dadurch wird die Abgabe von Wasser bei hören Temperaturen sowie die oben beschriebenen, nachteiligen Folgen vermieden.

In einer bevorzugten Ausgestaltung weisen die Magmatite keine Chlorid- bzw. Sulfat-haltigen Salze (z.B. Halit, Polyhalit, Sylvin, Glauberit, Carnallit) auf (Modal 0 %).

In einer bevorzugten Ausgestaltung weisen die Magmatite keine erhöhten oxidischen Erzgehalte (z.B. Titanomagnetite etc.) auf (Modal <1,5 %).

Dadurch wird jeweils vermieden, dass im Übertragungsmedium Luft enthaltener Sauerstoff eine Tieftemperatur bzw. eine Hochtemperatur-Oxidation verursacht, die Fehlstellen im Kristallgitter, Mikrorisse und auch Mineralverfärbungen des Wärmespeichermaterials erzeugen würde.

In einer bevorzugten Ausgestaltung weisen die Magmatite keine größeren Anreicherungen von Einzelkristallen ("Erz-Cluster aus Cr-, Ti- und Fe-Spinellen") auf. Eine Erzkorngröße <5 µm ist dabei als bevorzugter Grenzwert einzuhalten.

Dadurch werden lokale Spannungen sowie Mikrorisse im Wärmespeichermaterial reduziert bzw. vermieden.

In einer bevorzugten Ausgestaltung weisen die Magmatite keine erhöhten Anteile an schwefelhaltigen Erzen (z.B. Pyrit, Pyrrhotin) auf (Modal <0,1 %).

Dadurch wird die Bildung von schwefelhaltigen Reaktionsprodukten (z.B. SO₂, SO₃) verhindert, die die Gesteinsstruktur des Wärmespeichermaterials destabilisieren würden.

In einer bevorzugten Ausgestaltung weisen die Magmatite einen sehr geringen Anteil an Chrom-Erz auf (Modal <0,1 %). Dadurch werden Spannungen im Mineralverbund des Wärmespeichermaterials durch unterschiedliche Wärmeausdehnungskoeffizienten vermieden, die bei einer lokalen, Clusterförmigen Erzanreicherung auftreten würden.

In einer bevorzugten Ausgestaltung weisen die Magmatite einen hohen bis sehr hohen Anteil (>90 %) an inerten bzw. reaktionsträgen Plagioklasen mit einem erhöhten Anorthit-Anteil (>50 %) auf.

Durch den entsprechend hohen Calcium-Anteil in den Plagioklasen wird die Schmelztemperatur der Mischkristalle (Mischkristallreihe Albit - Anorthit) des Wärmespeichermaterials und damit die maximal mögliche Betriebstemperatur des Wärmespeichers erhöht, was einen wesentlichen Vorteil gegenüber anderen Mineralphasen darstellt.

Weiter ist bei der Auswahl des Wärmespeichermaterials zu beachten, dass diese Plagioklase nicht großflächig sekundär alteriert sind.

Als Wärmespeichermaterial werden Kalifeldspäte ausgeschlossen, jedoch dürfen Foide als Feldspatvertreter im Wärmespeichermaterial in geringen Mengen (<10 %) im Gestein enthalten sein.

In einer bevorzugten Ausgestaltung weisen die Magmatite einen hohen bis sehr hohen Anteil (Modal >90 %)an gleichmäßig kristallisierten Pyroxenen und/oder Olivin ohne viele Fluid-Einschlüsse auf. Größere sekundäre Mineralalterationen und tektonische Beanspruchungen sind nachteilig und unerwünscht.

In einer bevorzugten Ausgestaltung weisen die Magmatite keine erhöhten Anteile an Fluiden (z.B. Gase, Flüssigkeiten) auf (Modal <0,1 %). Dadurch wird die Stabilität der Einzelminerale erhöht. Ansonsten könnte es beim zyklischen Aufheizen bzw. Abkühlen des Wärmespeichers zum Platzen von gas- und/oder flüssigkeitsgefüllten Einschlüssen kommen.

In einer bevorzugten Ausgestaltung weisen die Magmatite keine metamorphen Mineralphasen (z.B. Chlorite, Hornblenden, Glimmer etc.) und keine Fremdgesteinseinschlüsse (Xenolithe) auf (Modal 0 %).

Als Wärmespeichermaterial sind insbesondere die Gesteinstypen Anorthosit und Gabbro geeignet. Diese weisen in der Regel einen hohen bis sehr hohen Anteil an Ca-reichen Plagioklasen (>An50), Mg-reichen Pyroxenen und Olivinen sowie einen geringen bis sehr geringen oxidischen Eisenerzgehalt (Titanomagnetit, Ilmenit, Hämatit) auf.

Das entsprechend ausgewählte Wärmespeicher-Material bildet ein Optimum hinsichtlich:
- der thermischen Kapazität (spezifische Wärmekapazität),
- der thermischen Leitfähigkeit (Wärmeleitfähigkeit),
- der thermischen Ausdehnung,
- der strukturellen Langzeit-Stabilität bei thermischer und mechanischer Belastung,
- dem Verhalten bei thermischer Schock-Beanspruchung,
- der Umweltverträglichkeit,
- der Verfügbarkeit,
- und der Kosten.

Das Wärmespeicher-Material ist insbesondere für einen Einsatz bei Wärmespeicher-Temperaturen bis zu 750°C geeignet.

Das Wärmespeicher-Material übersteht aufgrund seiner speziellen, homogenen Kristallstruktur schnell erfolgende Temperaturwechsel ohne Risse im Material.

Insbesondere die thermische sowie die mechanische Stabilität des Wärmespeichers werden durch das genannte Wärmespeicher-Material beträchtlich verlängert.

Nachfolgend wird die vorliegende Erfindung anhand von Figuren näher erläutert. Dabei zeigen:
- FIG 1: in Tabellenform Eigenschaften von geeignetem Wärmespeichermaterial zur Verwendung in der erfindungsgemäßen Anordnung,
- FIG 2: in einer ersten Darstellung (links) die chemische und mineralogische Zusammensetzung der Plagioklas-Mischkristallreihe und in einer zweiten Darstellung (rechts)die Löslichkeit von Plagioklasen mit steigendem Ca-Gehalt,
- FIG 3: in einer Übersicht ein vereinfachtes Schema einer kalkalkalinen Magmen-Differentiation,
- FIG 4: eine Übersicht mit Gesteinstypen, die besonders zur Wärmespeicherung geeignet sind,
- FIG 5: eine Übersicht zur Veranschaulichung der Einteilung der Plutonite nach Streckeisen und
- FIG 6: eine Übersicht der Plagioklas-Feldspäte und Alkali-Feldspäte mit jeweiligem Übergang zum besseren Verständnis der Erfindung.

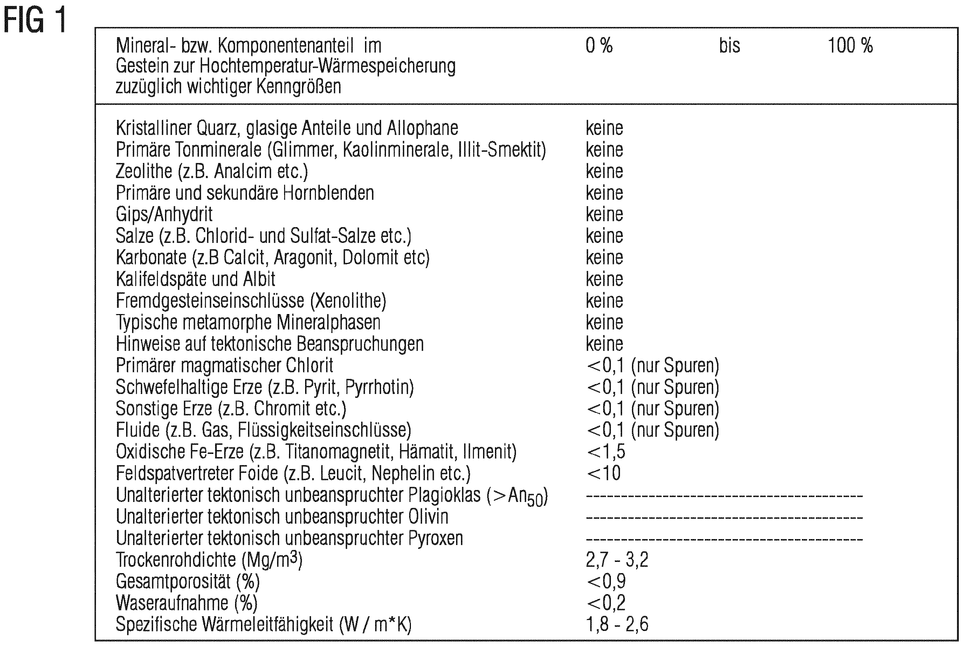

FIG 1 zeigt zusammengefasste Eigenschaften von geeignetem Wärmespeichermaterial, das in der erfindungsgemäßen Anordnung verwendet wird.

Die Übersichtstabelle quantifiziert (Modal %) die wichtigsten gesteinsbildenden Minerale bzw. deren Komponentenanteile sowie Kenngrößen, die ein theoretisch geeignetes Gestein für eine Wärmespeicherung bis 750°C aufweisen muss.

Ferner werden zusätzlich wichtige Gesteinskenndaten (Trockenrohdichte, Gesamtporosität, Wasseraufnahme, spezifische Wärmeleitfähigkeit) mit Grenzwerten aufgeführt.

Oxidische Eisenerze, die im Anorthosit innerhalb der Plagioklas-Feldspäte eingebaut werden, sind somit gegenüber Oxidationsvorgängen durch Luft-Sauerstoff zum Teil geschützt.

Durch den genannten Prozentanteil der oxidischen Eisenerze werden chemische Reaktionen mit Sauerstoff abgeschwächt, so dass sie vernachlässigbar sind.

Ein möglichst hoher Calcium-Anteil in den Plagioklasen (Bywtonit, Anorthit) erhöht in der Regel die Schmelztemperatur des Wärmespeicher-Materials und erhöht somit dessen maximal mögliche Betriebstemperatur und dessen Speicherkapazität.

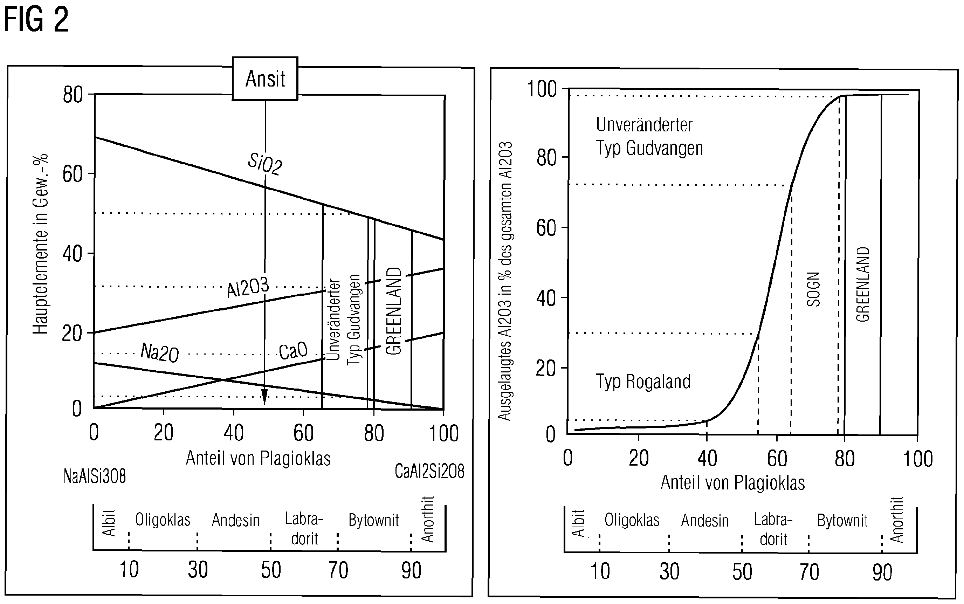

FIG 2 zeigt in einer ersten Darstellung (links) die chemische und mineralogische Zusammensetzung der Plagioklas-Mischkristallreihe.

Auf einer ersten horizontalen Achse ist der Anorthit (An)-Anteil in der Plagioklas-Mischkristallreihe von 0 bis 100 aufgetragen.

Auf einer zweiten, darunter liegenden, horizontalen Achse ist der jeweils namengebende Konzentrationsübergang in der Plagioklas-Mischkristallreihe von links (Albit, NaAlSi₃O₈) nach rechts (Anorthit, CaAl₂Si₂O₈) aufgetragen.

Auf der vertikalen Achse sind die "Hauptelemente in Gew.-%" aufgetragen.

Anorthosite (auch Plagioklasite) sind leukokrate plutonische Gesteine, die sich durch einen sehr hohen Anteil von Plagioklasen (90% - 100%) auszeichnen.

Ansit (Markenbezeichnung eines norwegischen Anorthosit) ist auf der horizontalen Achse als geeignetes Plagioklas-reiches Gestein im Diagramm markiert.

Die beiden Anorthite vom Typ "Gudvangen" und "Greenland" sind im Diagramm als besonders geeignete Gesteinstypen zur Verwendung als Wärmespeichermaterial markiert.

In einer zweiten Darstellung (rechts) ist die Löslichkeit von Anorthit-reichem Plagioklas mit steigendem Calcium-Gehalt aufgezeigt.

Auf einer ersten horizontalen Achse ist der Anorthit-Anteil in der Plagioklas-Mischkristallreihe von 0 bis 100 aufgetragen.

Auf einer zweiten, darunter liegenden, horizontalen Achse ist der jeweils namengebende Konzentrationsübergang in der Plagioklas-Mischkristallreihe von links (Albit, NaAlSi₃O₈) nach rechts (Anorthit, CaAl₂Si₂O₈) aufgetragen.

Auf der vertikalen Achse ist "Ausgelaugtes Al₂O₃ in % des gesamten Al₂O₃" aufgetragen.

Die beiden Anorthite vom Typ "Gudvangen" und "Greenland" sind im Diagramm als besonders geeignete Gesteinstypen zur Verwendung als Wärmespeichermaterial markiert.

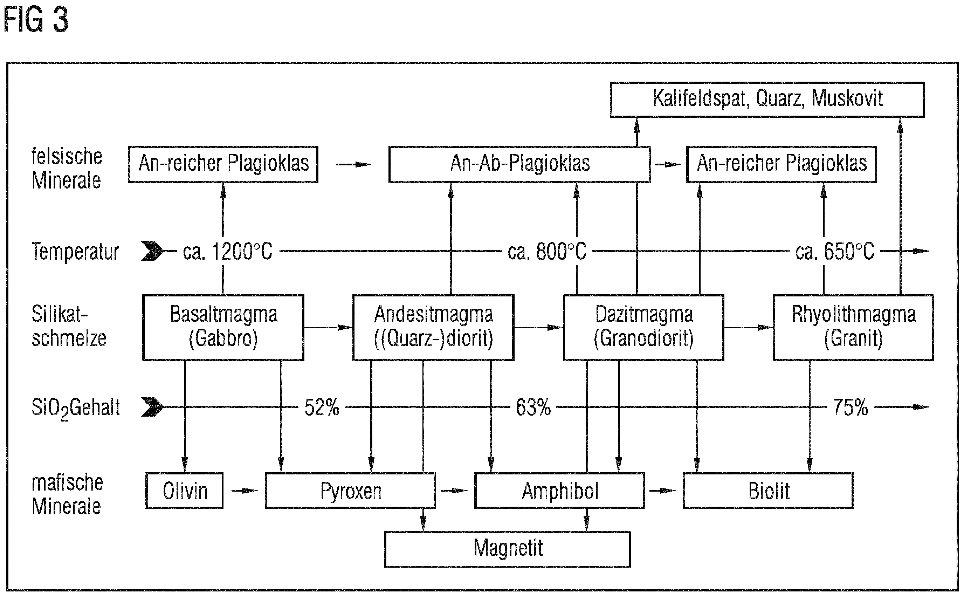

FIG 3 zeigt in einer Übersicht ein vereinfachtes Schema einer kalkalkalinen Magmendifferentiation.

Dabei zeigen senkrechte Pfeile auf Minerale (oben felsische, unten mafische Minerale), die in der jeweiligen Schmelze vorkommen können und deren Entfernung aus der Schmelze eine Differentiation der Restschmelze zur Folge hat.

Waagrechte Pfeile zwischen Mineralien zeigen mögliche Kristallisationsprozesse in einer sich - mit abnehmender Temperatur und zunehmendem SiO₂-Gehalt - differenzierenden Schmelze.

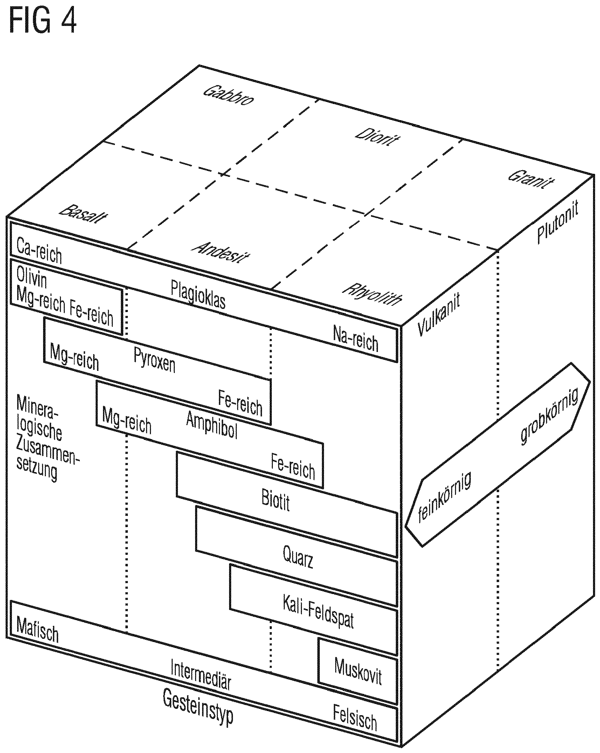

FIG 4 zeigt eine Übersicht von Gesteinstypen, in der zur Wärmespeicherung besonders geeignete Gesteinstypen und ihre wichtigsten Mineralphasen gezeigt sind.

Auf einer horizontalen Achse sind drei Gesteinstyp-Bereiche (mafisch, intermediär, felsisch) aufgetragen, während auf der vertikalen Achse mineralologische Zusammensetzungen aufgetragen sind.

Auf einer dritten Achse wird unterschieden zwischen "feinkörniger" und "grobkörniger" Struktur.

Es ergibt sich dadurch ein dreidimensionales Blockbild zur Mineralogie von Magmatiten.

Das linke Drittel des dargestellten Quaders zeigt die zur Wärmespeicherung besonders geeigneten Wärmespeicher-Materialen "Basalt" und "Gabbro".

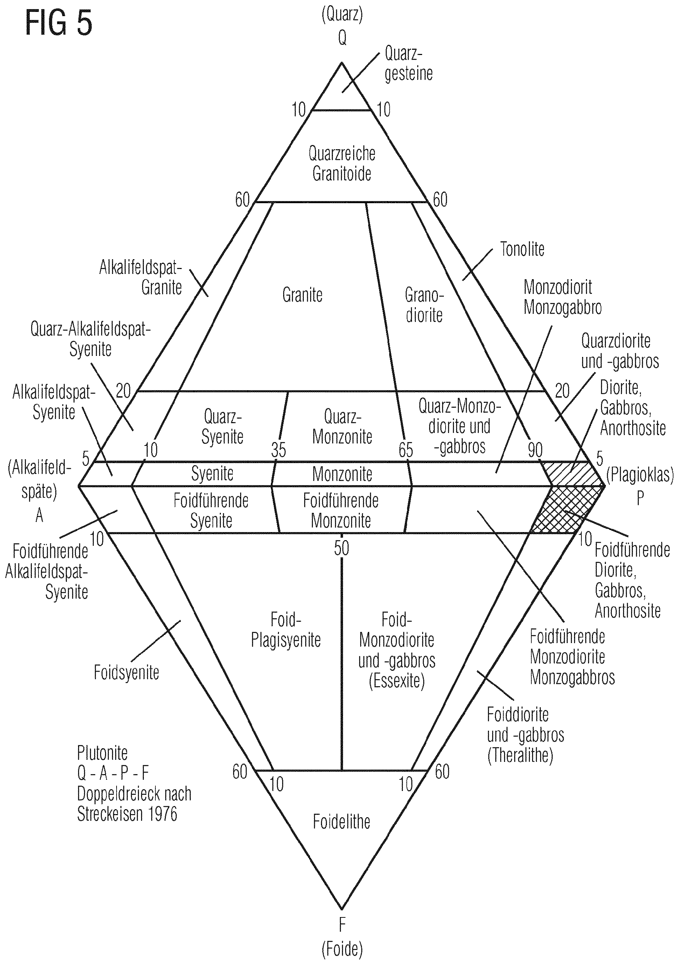

FIG 5 zeigt zur Veranschaulichung die Einteilung der Plutonite nach Streckeisen.

Als Wärmespeichermaterial potentiell geeignete Gesteine liegen im Diagramm mit den Eckpunkten Quarz (Q), Alkalifeldspat und Albit (A), Plagioklas ohne Albit (P) und Foide (F).

Als Wärmespeichermaterial werden bevorzugt Diorite, Gabbros, Anorthosite und auch Foid-führende Diorite verwendet.

Diese sind im Plagioklas-reichen Bereich im rechten Bereich des Diagramms gezeigt.

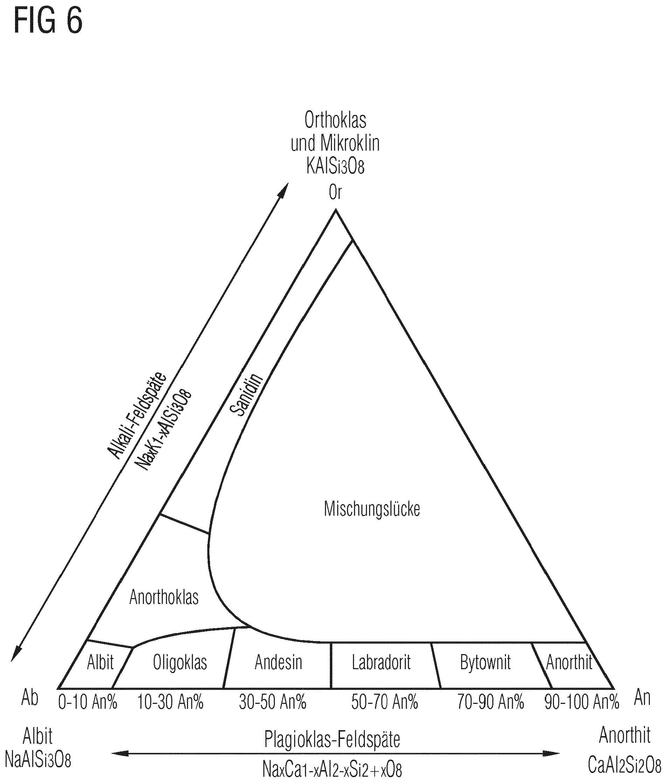

FIG 6 zeigt Plagioklas-Feldspäte und Alkali-Feldspäte mit jeweiligem Übergang zum besseren Verständnis der Erfindung.

## Patentansprüche

1. Anordnung zur Speicherung von thermischer Energie,
- mit einem räumlich ausgestalteten Wärmespeicher,
- mit einem festen natürlichem Material, das zur Wärmespeicherung als Wärmespeichermaterial ausgebildet ist,
- mit einem Fluid, das zur Übertragung von thermischer Energie an das Wärmespeichermaterial und zur Entnahme von thermischer Energie aus dem Wärmespeichermaterial ausgebildet ist,
- bei dem das Wärmespeichermaterial im Inneren des Wärmespeichers angeordnet ist,
- bei dem der Wärmespeicher zumindest einen Eingang und zumindest einen Ausgang aufweist, über die das Fluid zur Energiespeicherung und zur Energieentnahme geleitet wird,
- wobei erhitztes Fluid zur Energiespeicherung über den Eingang in den Wärmespeicher eingeleitet wird, dort thermische Energie an das Wärmespeichermaterial überträgt und über den Ausgang aus dem Wärmespeicher geleitet wird, und
- wobei kühles Fluid zur Energieentnahme über den Eingang in den Wärmespeicher eingeleitet wird, dort thermische Energie vom Wärmespeichermaterial aufnimmt und über den Ausgang aus dem Wärmespeicher geleitet wird,
- wobei das Wärmespeichermaterial ein magmatisches Gestein ist,
**dadurch gekennzeichnet, dass**
- das Wärmespeichermaterial keine Anteile an primären wasserhaltigen Mineralphasen aufweist.

2. Anordnung nach Anspruch 1, **dadurch gekennzeichnet, dass** das Fluid Luft ist.

3. Anordnung nach Anspruch 1, **dadurch gekennzeichnet, dass** das Wärmespeichermaterial Vulkanit oder Plutonit ist.

4. Anordnung nach Anspruch 3, **dadurch gekennzeichnet, dass** das Wärmespeichermaterial Basalt oder Gabbro oder Anorthosit ist.

5. Anordnung nach Anspruch 1, **dadurch gekennzeichnet, dass** das Wärmespeichermaterial keinen kristallinen Quarz-Anteil an SiO₂ aufweist.

6. Anordnung nach Anspruch 1, **dadurch gekennzeichnet, dass** das Wärmespeichermaterial keine glasig-amorphen Anteile und Allophane aufweist.

7. Anordnung nach Anspruch 1, **dadurch gekennzeichnet, dass** das Wärmespeichermaterial keine Karbonate aufweist.

8. Anordnung nach Anspruch 1, **dadurch gekennzeichnet, dass** das Wärmespeichermaterial keine Sulfate als Salze aufweist.

9. Anordnung nach Anspruch 1, **dadurch gekennzeichnet, dass** das Wärmespeichermaterial keine Chlorid- oder Sulfat-haltigen Salze aufweist.

10. Anordnung nach Anspruch 1, **dadurch gekennzeichnet, dass** das Wärmespeichermaterial oxidische Erzgehalte mit einem maximalen modalen Bestandteil von < Modal 1,5 % aufweist.

11. Anordnung nach Anspruch 1, **dadurch gekennzeichnet, dass** das Wärmespeichermaterial keine Erz-Clustern-Anreicherungen mit einer Erzkorngröße von größer als 5 µm aufweist, wobei die Erz-Cluster Chrom-, Titan oder Eisen-Spinelle beinhalten.

12. Anordnung nach Anspruch 1, **dadurch gekennzeichnet, dass** das Wärmespeichermaterial Anteile an schwefelhaltigen Erzen mit einem modalen Bestandteil von < Modal 0,1 % aufweist.

13. Anordnung nach Anspruch 1, **dadurch gekennzeichnet, dass** das Wärmespeichermaterial einen Chrom-Erz-Anteil entsprechend einem modalen Bestandteil von < Modal 0,1 % aufweist.

14. Anordnung nach Anspruch 1, **dadurch gekennzeichnet, dass** das Wärmespeichermaterial einen Anteil von größer Modal 90% an inerten oder reaktionsträgen Plagioklasen mit einem erhöhten Anorthit-Anteil von größer Modal 50% aufweist.

15. Anordnung nach Anspruch 1, **dadurch gekennzeichnet, dass** das Wärmespeichermaterial einen Anteil von größer Modal 90% an gleichmäßig kristallisierten Pyroxenen und/oder Olivin aufweist, die bevorzugt ohne Fluid-Einschlüsse sind.

16. Anordnung nach Anspruch 1, **dadurch gekennzeichnet, dass** das Wärmespeichermaterial keine metamorphen Mineralphasen und keine Fremdgesteinseinschlüsse aufweist.

## Claims

1. An arrangement for storage of thermal energy,
- comprising a heat storage means of three-dimensional configuration,
- comprising a solid natural material designed for heat storage as heat storage material,
- comprising a fluid designed for transfer of thermal energy to the heat storage material and for withdrawal of thermal energy from the heat storage material,
- in which the heat storage material is disposed within the heat storage means,
- in which the heat storage means has at least one inlet and at least one outlet through which the fluid for energy storage and for energy withdrawal is guided,
- wherein heated fluid for energy storage is introduced into the heat storage means via the inlet, transfers thermal energy to the heat storage material therein and is guided out of the heat storage means via the outlet, and
- wherein cool fluid for energy withdrawal is introduced into the heat storage means via the inlet, absorbs thermal energy from the heat storage material therein and is guided out of the heat storage means via the outlet,
- wherein the heat storage material is a magmatic rock,
**characterized in that**
- the heat storage material does not include any proportions of primary water-containing mineral phases.

2. The arrangement as claimed in claim 1, **characterized in that** the fluid is air.

3. The arrangement as claimed in claim 1, **characterized in that** the heat storage material is vulcanite or plutonite.

4. The arrangement as claimed in claim 3, **characterized in that** the heat storage material is basalt or gabbro or anorthosite.

5. The arrangement as claimed in claim 1, **characterized in that** the heat storage material does not include any crystalline quartz component of SiO₂.

6. The arrangement as claimed in claim 1, **characterized in that** the heat storage material does not include any glassy-amorphous components and allophane.

7. The arrangement as claimed in claim 1, **characterized in that** the heat storage material does not include any carbonates.

8. The arrangement as claimed in claim 1, **characterized in that** the heat storage material does not include any sulfates as salts.

9. The arrangement as claimed in claim 1, **characterized in that** the heat storage material does not include any chloride- or sulfate-containing salts.

10. The arrangement as claimed in claim 1, **characterized in that** the heat storage material includes oxidic ore contents with a maximum modal ratio < 1.5%.

11. The arrangement as claimed in claim 1, **characterized in that** the heat storage material does not include any ore cluster enrichments with an ore grain size of greater than 5 µm, where the ore clusters comprise chromium spinels, titanium spinels or iron spinels.

12. The arrangement as claimed in claim 1, **characterized in that** the heat storage material includes proportions of sulfur-containing ores with a modal share of < modal 0.1%.

13. The arrangement as claimed in claim 1, **characterized in that** the heat storage material has a chromium ore content corresponding to a modal share of < modal 0.1%.

14. The arrangement as claimed in claim 1, **characterized in that** the heat storage material has a proportion of greater than modal 90% of inert or unreactive plagioclases having an elevated anorthite content of greater than modal 50%.

15. The arrangement as claimed in claim 1, **characterized in that** the heat storage material includes a proportion of greater than modal 90% of uniformly crystallized pyroxenes and/or olivine, preferably lacking fluid inclusions.

16. The arrangement as claimed in claim 1, **characterized in that** the heat storage material does not include any metamorphous mineral phases or any extraneous rock inclusions.

## Revendications

1. Agencement destiné au stockage d'énergie thermique
- qui comprend un accumulateur thermique aménagé dans l'espace ;
- qui comprend un matériau naturel solide qui est réalisé, à des fins d'accumulation thermique, à titre de matériau accumulateur de chaleur ;
- qui comprend un fluide, qui est réalisé à des fins de transfert de l'énergie thermique au matériau accumulateur de chaleur et à des fins de prélèvement de l'énergie thermique à partir du matériau accumulateur de chaleur ;
- dans lequel le matériau accumulateur de chaleur est disposé à l'intérieur de l'accumulateur thermique ;
- dans lequel l'accumulateur thermique présente au moins une entrée et au moins une sortie, par l'intermédiaire desquels le fluide est guidé à des fins d'accumulation d'énergie et à des fins de prélèvement d'énergie ;
- dans lequel du fluide réchauffé est introduit à des fins d'accumulation d'énergie par l'intermédiaire de l'entrée dans l'accumulateur thermique dans lequel il transfère de l'énergie thermique au matériau accumulateur de chaleur avant d'être guidé par l'intermédiaire de la sortie à l'extérieur de l'accumulateur thermique ; et
- dans lequel du fluide refroidi est introduit à des fins de prélèvement d'énergie par l'intermédiaire de l'entrée dans l'accumulateur thermique dans lequel il absorbe de l'énergie thermique à partir du matériau accumulateur de chaleur avant d'être guidé par l'intermédiaire de la sortie à l'extérieur de l'accumulateur thermique ;
- dans lequel le matériau accumulateur de chaleur représente une roche magmatique ;
**caractérisé en ce que**
- le matériau accumulateur de chaleur ne présente aucune fraction de phases minérales primaires contenant de l'eau.

2. Agencement selon la revendication 1, **caractérisé en ce que** le fluide est de l'air.

3. Agencement selon la revendication 1, **caractérisé en ce que** le matériau accumulateur de chaleur représente de la vulcanite ou de la plutonite.

4. Agencement selon la revendication 3, **caractérisé en ce que** le matériau accumulateur de chaleur représente du basalte ou du gabbro ou de l'anorthosite.

5. Agencement selon la revendication 1, **caractérisé en ce que** le matériau accumulateur de chaleur ne présente aucune fraction cristalline de quartz sous la forme de SiO₂.

6. Agencement selon la revendication 1, **caractérisé en ce que** le matériau accumulateur de chaleur ne présente aucune fraction vitreuse-amorphe et aucun allophane.

7. Agencement selon la revendication 1, **caractérisé en ce que** le matériau accumulateur de chaleur ne présente aucun carbonate.

8. Agencement selon la revendication 1, **caractérisé en ce que** le matériau accumulateur de chaleur ne présente aucun sulfate à titre de sel.

9. Agencement selon la revendication 1, **caractérisé en ce que** le matériau accumulateur de chaleur ne présente aucun sel qui contient des chlorures ou des sulfates.

10. Agencement selon la revendication 1, **caractérisé en ce que** le matériau accumulateur de chaleur présente des teneurs en minerais oxydés qui comprennent une composition minéralogique modale maximale égale à : mode < 1,5 %.

11. Agencement selon la revendication 1, **caractérisé en ce que** le matériau accumulateur de chaleur ne renferme aucun enrichissement en forme de grappes de minerais qui comprennent une grosseur de grains de minerais qui est supérieure à 5 µm ; dans lequel les grappes de minerais renferment des spinelles de chrome, de titane ou de fer.

12. Agencement selon la revendication 1, **caractérisé en ce que** le matériau accumulateur de chaleur présente des fractions de minerais sulfurés qui comprennent une composition minéralogique modale maximale égale à : mode < 0,1 %.

13. Agencement selon la revendication 1, **caractérisé en ce que** le matériau accumulateur de chaleur présente une fraction de minerai chromifère de manière qui correspond à une composition minéralogique modale maximale égale à : mode < 0,1 %.

14. Agencement selon la revendication 1, **caractérisé en ce que** le matériau accumulateur de chaleur présente une fraction de composition minéralogique modale s'élevant à 90 % en ce qui concerne des plagioclases inertes ou faisant office de support de réactions qui possèdent une fraction élevée en anorthite qui correspond à une composition minéralogique modale supérieure à 50 %.

15. Agencement selon la revendication 1, **caractérisé en ce que** le matériau accumulateur de chaleur présente une fraction de composition minéralogique modale supérieure à 90 % en ce qui concerne de l'olivine ou des pyroxènes uniformément cristallisés, qui, de préférence, sont exempts d'inclusions de fluide.

16. Agencement selon la revendication 1, **caractérisé en ce que** le matériau accumulateur de chaleur ne présente aucune phase minérale métamorphique et aucune inclusion de roches étrangères.
